# EUROPÄISCHE PATENTSCHRIFT

(11) **EP 1 169 164 B1**
(45) Veröffentlichungstag und Bekanntmachung des Hinweises auf die Patenterteilung: **18.09.2002**
(21) Anmeldenummer: 00926747.7
(22) Anmeldetag: 21.03.2000
(51) Int. Cl.: B26D 7/27

(54) **VERFAHREN ZUM AUFSCHNEIDEN VON LEBENSMITTELPRODUKTEN**
METHOD FOR SLICING FOODSTUFF PRODUCTS
PROCEDE PERMETTANT DE DECOUPER DES PRODUITS ALIMENTAIRES EN TRANCHES

(30) Priorität: 08.04.1999 DE 19915861
(43) Veröffentlichungstag der Anmeldung: 09.01.2002
(73) Patentinhaber: BIFORCE Anstalt, 9490 Vaduz (LI)
(72) Erfinder: WEBER, Günther, D-57334 Bad Laasphe (DE)
(74) Vertreter: Manitz, Finsterwald & Partner GbR
(86) Internationale Anmeldenummer: EP0002504
(87) Internationale Veröffentlichungsnummer: WO00061338

(56) Entgegenhaltungen:
- EP-A- 0 449 512
- WO-A-95/21375
- DE-A- 4 113 392
- GB-A- 1 507 683
- US-A- 4 136 504

## Beschreibung

Die Erfindung betrifft ein Verfahren zum Aufschneiden von Lebensmittelprodukten mit ungleichmäßiger Innenstruktur gemäß dem Oberbegriff des Anspruches 1.

Beim Aufschneiden von Lebensmittelprodukten kommt es nicht nur darauf an, möglichst gewichtskonstante Portionen, die aus geschindelten oder gestapelten Scheiben bestehen, zu erzielen, sondern es wird häufig auch angestrebt, innerhalb der einzelnen Portionen sicherzustellen, daß die Innenstruktur der Produktscheiben, z.B. der Fett- und Mageranteil bei Wurst- oder Schinkenscheiben möglichst gleich ist. Portionen gleichartiger Innenstruktur ergeben nicht nur ein optimales Erscheinungsbild, sondern führen auch zu definierten Wertigkeiten, d.h. es sind Klassierungen möglich, die auch unterschiedliche Preisgestaltungen zulassen und eine Unterscheidung zwischen höherwertigen und geringerwertigen Portionen gestatten.

Dieses sogenannte Grading von Portionen wird bisher durch manuelle Sortierung von sich beim Aufschneiden von Produkten ergebenden Portionen durchgeführt, wobei aufgrund der Schnelligkeit der Portionsbildung und aufgrund der Tatsache, daß in einer fertigen gestapelten Portion nur die oberste Scheibe und bei einer geschindelten Portion nur Teilbereiche der Scheiben sichtbar sind, diese Gradierung oder Klassifizierung von Personen nur sehr grob vorgenommen werden kann. Außerdem ist der erforderliche personelle Aufwand unerwünscht und unwirtschaftlich.
Ein Verfahren mit den Merkmalen des Oberbegriffs des Anspruchs 1 ist aus der EP-A-0 449 512 bekannt.

Aufgabe der Erfindung ist es, ein Verfahren zum Aufschneiden von Lebensmittelprodukten in der Weise zu gestalten, daß eine automatische Klassierung bzw. ein automatisches Grading erreicht werden kann und dabei auch bei hohen Schnittgeschwindigkeiten sichergestellt ist, daß die Abweichungen der Innenstruktur der einzelnen Scheiben einer Portion stets in einem definiert vorgebbaren Toleranzbereich liegen und somit ein sehr differenziertes Klassieren gewährleistet werden kann.

Gelöst wird diese Aufgabe nach der Erfindung durch die im kennzeichnenden Teil des Anspruchs 1 angegebenen Merkmale.

Hinsichtlich der Produkt-Innenstruktur werden bevorzugt die auf die Fläche bezogenen jeweiligen Anteile von unterschiedlichen Bestandteilen erfaßt, wobei als Bestandteile beispielsweise die Fleisch- bzw. Mageranteile und Fettanteile gewählt werden können.

Da die Anteile an unterschiedlichen Bestandteilen auch unterschiedliche Auswirkungen auf die Qualität bzw. Wertigkeit des jeweiligen Produkts haben können, werden erfindungsgemäß für verschiedene Bestandteile bevorzugt auch unterschiedliche Toleranzgrenzen vorgegeben.

In die Gewichtungsfaktoren kann auch die jeweiligen Scheibendicke eingehen, da im Hinblick auf die Erzielung gewichtskonstanter Portionen bei vielen Aufschneidevorgängen die Scheibendicke innerhalb einer Portion verändert wird.

Wenn die einzelnen gebildeten Portionen bestimmten Klassen zugeordnet sind, dann können diese nacheinander ggf. in unregelmäßiger Reihenfolge gebildeten klassierten Portionen elektronisch gekennzeichnet werden, so daß bei der Verpackung der jeweiligen Portionen auf einfache Weise die entsprechende Kennzeichnung bzw. Auszeichnung erfolgen kann.

Aus einem bestimmten Produkt werden im Regelfall Portionen zumindest einer bestimmten Klasse gebildet, und außerhalb des vorgegebenen Toleranzbereichs oder der vorgegebenen Toleranzbereiche liegende Produktscheiben werden ausgesondert oder abgeführt, was durch entsprechende Ansteuerung der dem Produktbildungsbereich zugeordneten Fördermittel geschehen oder beispielsweise durch Einschwenken einer Abführeinheit in den Strom gebildeter Scheiben erfolgen kann.

Als weiteres Aussonderungskriterium für die gebildeten Scheiben kann auch das Unterschreiten einer Mindestgröße der Fläche der jeweiligen Produktscheibe verwendet werden.

Bevorzugt wird dem an der Schneidstation vorgesehenen Portionsbildungsbereich ein Fördersystem zugeordnet, mittels dessen zu einer bestimmten Klasse gehörende Produktscheiben bzw. aus diesen Produktscheiben gebildete Teilportionen zwischen dem Produktbildungsbereich und einzelnen Parkpositionen wechselseitig verfahrbar und nach Fertigstellung der jeweiligen Portion abtransportierbar sind. Um für die Verfahroperationen jeweils auch bei schnell ablaufenden Aufschneidvorgängen genügend Zeit zur Verfügung zu haben, können entsprechende Leerschnitte durchgeführt werden.

## Patentansprüche

1. Verfahren zum Aufschneiden von Lebensmittelprodukten mit ungleichmäßiger Innenstruktur, wie z.B. Wurst, Schinken u. dgl., bei dem die Produkte in Scheiben geschnitten und geschindelte Portionen oder Stapelportionen gebildet und mittels eines Fördersystems aus dem Aufschneidebereich abtransportiert werden,
wobei die Schnittflächen der jeweils vom Produkt abzutrennenden Scheiben mittels einer optoelektronischen Einheit erfaßt werden und eine Auswertung der Schnittflächen bzw. der die Schnittflächen repräsentierenden Signale hinsichtlich der Produkt-Innenstruktur erfolgt, wobei Produktscheiben mit innerhalb vorgebbarer Toleranzgrenzen gleicher Innenstruktur zu Portionen einer bestimmten Klasse zusammengefaßt werden,
**dadurch gekennzeichnet,**
**daß** für die verschiedenen Bestandteile Gewichtungsfaktoren vorgesehen werden.

2. Verfahren nach Anspruch 1,
**dadurch gekennzeichnet,**
**daß** hinsichtlich der Produkt-Innenstruktur die auf die Fläche bezogenen jeweiligen Anteile von unterschiedlichen Bestandteilen erfaßt und bewertet werden.

3. Verfahren nach Anspruch 2,
**dadurch gekennzeichnet,**
**daß** als unterschiedliche Bestandteile Fleisch- bzw. Mageranteile und Fettanteile erfaßt werden.

4. Verfahren nach Anspruch 2,
**dadurch gekennzeichnet,**
**daß** hinsichtlich der Produktinnenstruktur Farbverteilungen erfaßt werden.

5. Verfahren nach einem der vorhergehenden Ansprüche,
**dadurch gekennzeichnet,**
**daß** für verschiedene Bestandteile unterschiedliche Toleranzgrenzen vorgegeben werden.

6. Verfahren nach einem der vorhergehenden Ansprüche,
**dadurch gekennzeichnet,**
**daß** Gewichtungsfaktoren in Abhängigkeit von der jeweiligen Scheibendicke vorgesehen werden.

7. Verfahren nach einem der vorhergehenden Ansprüche,
**dadurch gekennzeichnet,**
**daß** die bestimmten Klassen zugeordneten Portionen portionsbezogen elektronisch markiert werden.

8. Verfahren nach einem der vorhergehenden Ansprüche,
**dadurch gekennzeichnet,**
**daß** dem an der Schneidstation vorgesehenen Portionsbildungsbereich Fördermittel zugeordnet werden, mittels der zu einer bestimmten Klasse gehörende Produktscheiben bzw. aus diesen Produktscheiben gebildete Teilportionen zwischen dem Portionsbildungsbereich und Parkpositionen wechselweise verfahrbar und nach Fertigstellung der jeweiligen Portion abtransportierbar sind.

9. Verfahren nach einem der vorhergehenden Ansprüche,
**dadurch gekennzeichnet,**
**daß** aus einem Produkt Portionen zumindest einer bestimmten Klasse gebildet und außerhalb des vorgegebenen Toleranzbereichs oder der vorgegebenen Toleranzbereiche liegende Produktscheiben ausgesondert und abgeführt werden.

10. Verfahren nach Anspruch 9,
**dadurch gekennzeichnet,**
**daß** als weiteres Aussonderungskriterium das Unterschreiten einer Mindestgröße der Fläche der jeweiligen Produktscheibe verwendet wird.

## Claims

1. A method for the slicing of food products having a non-uniform inner structure, such as sausage, ham and the like, in which the products are cut into slices and overlapping portions or stack portions are formed and transported away from the slicing region by means of a conveyor system,
wherein the cut surfaces of each of the slices to be separated from the product are detected by an opto-electronic unit and an evaluation of the cut surfaces or of the signals representing the cut surfaces takes place with respect to the inner structure of the product, with product slices having the same inner structure within pre-settable tolerance limits being collected together in portions of a specific classification,
**characterized in that**
weighting factors are provided for the different components.

2. A method in accordance with claim 1, **characterized in that** the respective-portions of different components relating to the surface are detected and evaluated with respect to the inner structure of the product.

3. A method in accordance with claim 2, **characterized in that** meat portions or lean portions and fat portions are detected as the different components.

4. A method in accordance with claim 2, **characterized in that** color distributions are detected with respect to the inner structure of the product.

5. A method in accordance with any one of the preceding claims, **characterized in that** different tolerance limits are pre-set for different components.

6. A method in accordance with claim 6, **characterized in that** weighting factors are provided in dependence on the respective slice thickness.

7. A method in accordance with any one of the preceding claims, **characterized in that** the portions associated with specific classifications are electronically marked portion-wise.

8. A method in accordance with any one of the preceding claims, **characterized in that** conveyor means are associated with the portion forming region provided at the cutting station by means of which product slices belonging to a specific classification, or part portions formed from these product slices, can alternately be moved between the product forming region and parking positions and can be transported away after completion of the respective portion.

9. A method in accordance with any one of the preceding claims, **characterized in that** portions of at least one specific classification are formed from a product and product slices outside the pre-set tolerance range, or the pre-set tolerance ranges, are sorted out and led away.

10. A method in accordance with claim 9, **characterized in that** when a minimum size of the surface of the respective product slice is not reached, this is used as a further sorting criterion.

## Revendications

1. Procédé pour découper des produits alimentaires présentant une structure intérieure irrégulière, comme par exemple des saucisses, du saucisson, du jambon et analogue, dans lequel on découpe les produits en tranches et on forme des portions en écailles ou des portions empilées et on les enlève au moyen d'un système de convoyage hors de la zone de découpe, dans lequel on détecte les surfaces de coupe des tranches respectives à séparer du produit au moyen d'une unité optoélectronique et on effectue une évaluation des surfaces de coupe ou des signaux représentant les surfaces de coupe à l'égard de la structure intérieure du produit, les tranches de produit de structure intérieure égale à l'intérieur de limites de tolérances prédéterminées étant regroupées en portions d'une classe déterminée, **caractérisé en ce que** l'on prévoit des facteurs de pondération pour les ingrédients différents.

2. Procédé selon la revendication 1, **caractérisé en ce qu'**à l'égard de la structure intérieure du produit, on détecte et évalue les proportions respectives par référence à la surface des ingrédients différents.

3. Procédé selon la revendication 2, **caractérisé en ce que** l'on détecte les proportions de viande ou proportions maigres et les proportions de matières grasses à titre d'ingrédients différents.

4. Procédé selon la revendication 2, **caractérisé en ce que** l'on détecte des répartitions de couleurs à l'égard de la structure intérieure du produit.

5. Procédé selon l'une des revendications précédentes, **caractérisé en ce qu'**on détermine des limites de tolérances différentes pour des ingrédients différents.

6. Procédé selon l'une des revendications précédentes, **caractérisé en ce que** l'on prévoit des facteurs de pondération en dépendance de l'épaisseur de tranche respective.

7. Procédé selon l'une des revendications précédentes, **caractérisé en ce que** les portions associées à des classes déterminées sont marquées par voie électronique par référence aux portions.

8. Procédé selon l'une des revendications précédentes, **caractérisé en ce que** l'on associe à la zone de formation de portion prévue sur la station de coupe des moyens de convoyage par lesquels des tranches de produits appartenant à une classe déterminée ou des portions partielles formées par ces tranches de produit peuvent être déplacées en alternance entre la zone de formation de produit et les positions d'attente et être enlevées après finition de la portion respective.

9. Procédé selon l'une des revendications précédentes, **caractérisé en ce que** l'on forme à partir d'un produit des portions d'au moins d'une classe déterminée, et les tranches de produits qui se trouvent à l'extérieur de la plage de tolérances prédéterminée ou des plages de tolérances prédéterminées sont triées et enlevées.

10. Procédé selon la revendication 9, **caractérisé en ce que** l'on exploite, comme autre critère de triage, le fait que la surface de la tranche de produit respective passe au-dessous d'une taille minimale.
